# EUROPÄISCHE PATENTSCHRIFT

(11) **EP 1 752 896 B1**
(45) Veröffentlichungstag und Bekanntmachung des Hinweises auf die Patenterteilung: **03.06.2009**
(21) Anmeldenummer: 05017627.0
(22) Anmeldetag: 12.08.2005
(51) Int. Cl.: G06F 17/50

(54) **Grafische Verschaltung von Hardware-Signalen**
Graphical interconnection of hardware signals
Interconnexion graphique des signaux matériel

(43) Veröffentlichungstag der Anmeldung: 14.02.2007
(73) Patentinhaber: SIEMENS AKTIENGESELLSCHAFT, 80333 München (DE)
(72) Erfinder: Menzl, Franz-Josef, 91171 Greding (DE); Mildenberger, Ralf, 77746 Schutterwald (DE); Ibarra, Pablo Munoz, 91058 Erlangen (DE); Platz, Axel, 81479 München (DE); Schmidt, Johanna, 84489 Burghausen (DE); Wehrfritz, Wilhelm, 91077 Neunkirchen am Brand (DE); Weinländer, Markus, 91230 Happurg (DE)

(56) Entgegenhaltungen:
- EP-B- 0 876 647
- ANDERSON D ET AL: "A field programmable analog array and its application" CUSTOM INTEGRATED CIRCUITS CONFERENCE, 1997., PROCEEDINGS OF THE IEEE 1997 SANTA CLARA, CA, USA 5-8 MAY 1997, NEW YORK, NY, USA,IEEE, US, 5. Mai 1997 (1997-05-05), Seiten 555-558, XP010235366 ISBN: 0-7803-3669-0
- LU, LINNA: "Modulare Grafische Programmierung (MPG) von FPGAs" PROJEKTSEMINAR KBSE, TU ILMENAU, [Online] 29. Juni 2005 (2005-06-29), Seiten 1-28, XP002362315 Deutschland Gefunden im Internet: URL:http://www.theoinf.tu-ilmenau.de/~stre itdf/KBSE/StudVortraege/Lu.pdf> [gefunden am 2006-01-11]

## Beschreibung

Die Erfindung betrifft ein System und ein Verfahren zur grafischen Verschaltung von Hardware-Signalen eines Gerätes, insbesondere eines Steuerungsgerätes.

Ein derartiges System kommt insbesondere im Bereich der industriellen Automatisierung zum Einsatz. Eine wesentliche Aufgabe beim Erstellen einer Automatisierungslösung ist die Programmierung. Dabei werden Hardware-Signale eines Steuerungssystems - das sind Ein- und Ausgangswerte eines Steuerungsgerätes - technisch auf einer Klemme aufgeschaltet und dann in sinnvoller Weise in einem Engineering-System mit Programmelementen für insbesondere speicherprogrammierbare Steuerungen, so genannte SPS, verknüpft. Um das gewünschte Hardware-Signal referenzieren zu können, ist die Eingabe einer Adresse erforderlich, die logisch einem Hardware-Signal zugeordnet wird. Diese Adressen werden nach von System zu System unterschiedlichen Konventionen gebildet, die der Anwender kennen muss. Bei einer falsch verwendeten Adresse kann - bei syntaktischen Fehlern - das Engineering-System einen Fehler anzeigen; bei anderen Eingabefehlern kommt es zu Fehlfunktionen des Steuerungssystems.

Beispielsweise ist die Adresskonvention für SIMATIC S7: zuerst ein Buchstabe (E für Eingangs-, A für Ausgangssignale), gefolgt von der Byte-Adresse, einem Punkt und einer Bitnummer. Die Byte-Adressen beginnen bei 0 und werden je Baugruppe um 4 erhöht, also 0, 4, 8 usw. Die Bitadressen sind 0...7. Eine gültige Adresse ist also z.B. "E4.7".

Daneben ist es in vielen Systemen möglich, den einzelnen Adressen je ein Symbol zuzuordnen. Der Anwender kann somit den einzelnen Hardware-Signalen "sprechende" Namen zuordnen, d.h. Namen geben, die eine gewisse Bedeutung für den Anwender transportieren. Die Problematik dieser Lösung ist, dass ein Anwender, der die Konventionen nicht kennt, kaum in der Lage ist, ohne weitere Hilfestellungen ein Automatisierungssystem zu projektieren. Dies gilt in besonderem Maß für Umsteiger, da jeder Hersteller in der Regel eine eigene Konvention hat. Weiterhin ist es für Einsteiger schwierig zu verstehen, wie die verschiedenen Abbildungen (Symbol → Adresse → Hardware-Signal) funktionieren. Hier liegt eine erhebliche Einstiegshürde.

Aus dem Dokument "Anderson D. et al.: "A field programmable analog array and its application", Custom Integrated Circuits Conference, 1997, Proceedings of the IEEE 1997, Santa Clara, CA, USA, 5-8. Mai 1997, New York, Seiten 555-558, XP-010235366" ist ein System zur grafischen Verschaltung von Hardware-Signalen eines Gerätes bekannt.

Weiterhin ist aus "Lu, Linna: "Modulare Grafische Programmierung (MPG) von FPGAs", Projektseminar KBSE, TU Ilmenau, 29. Juni 2005, Seiten 1-28, XP-002362315" eine modulare graphische Programmierung (MGP) von FPGAs bekannt.

Der Erfindung liegt die Aufgabe zugrunde, ein System der eingangs genannten Art zu schaffen, mit dem Hardware-Signale eines Gerätes, insbesondere eines Steuerungsgerätes, auf einfache Weise grafisch mit Programmelementen einer Programmierumgebung verknüpfbar sind. Der Erfindung liegt ferner die Aufgabe zugrunde, ein Verfahren zu entwickeln, mit dem ein Anwender Hardware-Signale eines Gerätes, insbesondere eines Steuerungsgerätes, auf einfache Weise grafisch, d.h. ohne die im System verwendete Adresskonvention kennen zu müssen, mit Programmelementen verknüpfen kann.

Diese Aufgabe wird durch ein System und ein Verfahren gemäß der Ansprüche 1 und 4 gelöst.

Durch die erfindungsgemäße Einteilung der Benutzeroberfläche in mindestens zwei Teilbereiche, von denen in einem ersten Teilbereich die am Gerät vorhandenen Anschlussklemmen entsprechend ihrer Lage am Gerät zumindest schematisch visualisierbar sind und von denen in einem zweiten Teilbereich die Programmelemente der Programmierumgebung darstellbar sind, kann ein Anwender in der schematischen Darstellung - dem Abbild seines realen Gerätes, insbesondere Steuerungsgerätes, in dem er die Anschlussklemmen so wieder findet, wie sie sich auf dem Gerät befinden - im ersten Teilbereich der Benutzeroberfläche eine Anschlussklemme selektieren und per Drag & Drop auf das entsprechende Programmelement der Programmierumgebung im zweiten Teilbereich der Benutzeroberfläche ziehen, ohne dass er die im System verwendete Konvention kennen muss. Dadurch, dass die der im System verwendeten Konvention entsprechende logische Adresse sowohl an der Anschlussklemme in der schematischen Darstellung selbst als auch an dem Programmelement, auf das die entsprechende Anschlussklemme gezogen wurde, anzeigbar ist, kann der Anwender auch das im Engineering-System verwendete Adressschema schrittweise erlernen. Damit trägt das erfindungsgemäße System zusammen mit dem erfindungsgemäßen Verfahren wesentlich zur leichten Erlernbarkeit eines Engineering-Systems bei und hilft Anfängern wie Umsteigern von anderen Herstellern, einen leichten Einstieg in die Programmierung derartiger Engineering-Systeme zu finden. Dadurch ergeben sich geringe Einarbeitungszeiten und ein Wettbewerbsvorteil für den Hersteller.

In einer vorteilhaften Form der Ausgestaltung ist die schematische Darstellung des Gerätes vom System über eine Plug-and-Play-Funktion erzeugbar, mittels derer alle zur Darstellung erforderlichen Informationen aus dem angeschlossenen Gerät ausgelesen werden. Dazu muss der Anwender zunächst das Gerät aufbauen und an die Rechnereinheit anschließen, was er aber für den Betrieb oder einen Test des Gerätes sowieso tun muss. Eine Beschränkung des Systems oder der Anwendung des Verfahrens auf bestimmte, beispielsweise in der Rechnereinheit gespeicherte, Geräte gibt es nicht; die Verwendung der Plug-and-Play-Funktion erlaubt den Anschluss und Betrieb beliebiger Geräte sowie selbstverständlich die Darstellung und grafische Verschaltung der zugehörigen Anschlussklemmen, respektive der ihnen zugeordneten Hardware-Signalen.

In einer weiteren vorteilhaften Ausführungsform ist den Anschlussklemmen in der schematischen Darstellung des Gerätes jeweils ein symbolischer Name zuweisbar, der zusammen mit der logischen Adresse der jeweiligen Anschlussklemme in der Programmierumgebung anzeigbar ist. Der Name wird durch Klicken auf die Repräsentation eines Hardware-Signals in der schematischen Darstellung direkt an der Anschlussklemme editiert. Die gleichzeitige Darstellung des symbolischen Namens und der logischen Adresse ist eine zusätzliche Erleichterung für den Anwender bei der Erlernung der im Engineering-System verwendeten Adresskonvention.

In einer weiteren vorteilhaften Ausführungsform ist an den Anschlussklemmen in der schematischen Darstellung eine visuelle Markierung bei Verwendung der entsprechenden Anschlussklemme in der Programmierumgebung anbringbar. Dadurch wird dem Anwender angezeigt, dass das der entsprechenden Anschlussklemme zugeordnete Hardware-Signal bereits verschaltet wurde, wodurch eine versehentliche Doppelverschaltung von Hardware-Signalen vermieden wird.

Im Folgenden wird die Erfindung anhand der in den Figuren dargestellten Ausführungsbeispiele näher beschrieben und erläutert. Es zeigen:
- FIG 1: eine Prinzipdarstellung zur Zuordnung von Hardware-Signalen zu Programmelementen über logische Adressen,
- FIG 2: eine Benutzeroberfläche zur grafischen Verschaltung von Hardware-Signalen,
- FIG 3: die Benutzeroberfläche aus FIG 2 mit einem symbolischen Namen für eine Anschlussklemme im ersten Teilbereich der Benutzeroberfläche,
- FIG 4: die Benutzeroberfläche aus FIG 3 mit einem über Drag & Drop aus dem ersten Teilbereich der Benutzeroberfläche auf ein Programmelement im zweiten Teilbereich verschiebbaren Hardware-Signal,
- FIG 5: die Benutzeroberfläche aus FIG 4 mit dem im zweiten Teilbereich mit dem Programmelement verschalteten Hardware-Signal.

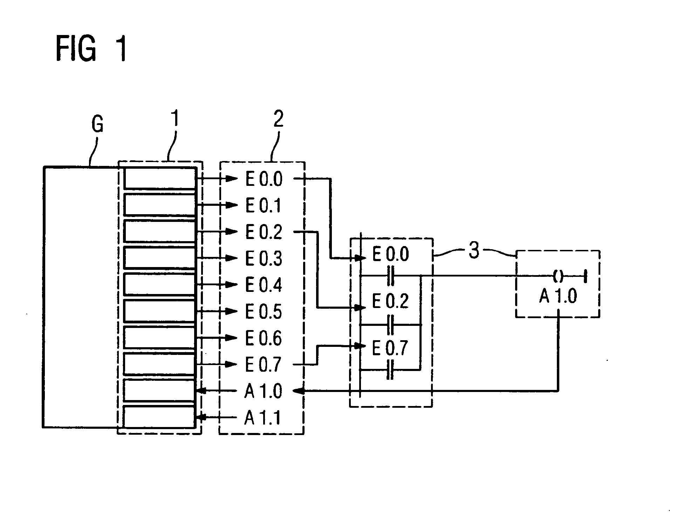

FIG 1 zeigt die Zuordnung von Hardware-Signalen eines Gerätes (G) zu Programmelementen 3 über logische Adressen 2 gemäß der Adresskonvention einer SPS (speicherprogrammierbaren Steuerung). Jeder einem Hardware-Signal zugeordneten Anschlussklemme 1 wird eine logische Adresse 2 zugeordnet. Diese wiederum werden zur Verschaltung der Hardware-Signale Programmelementen 3 zugeordnet.

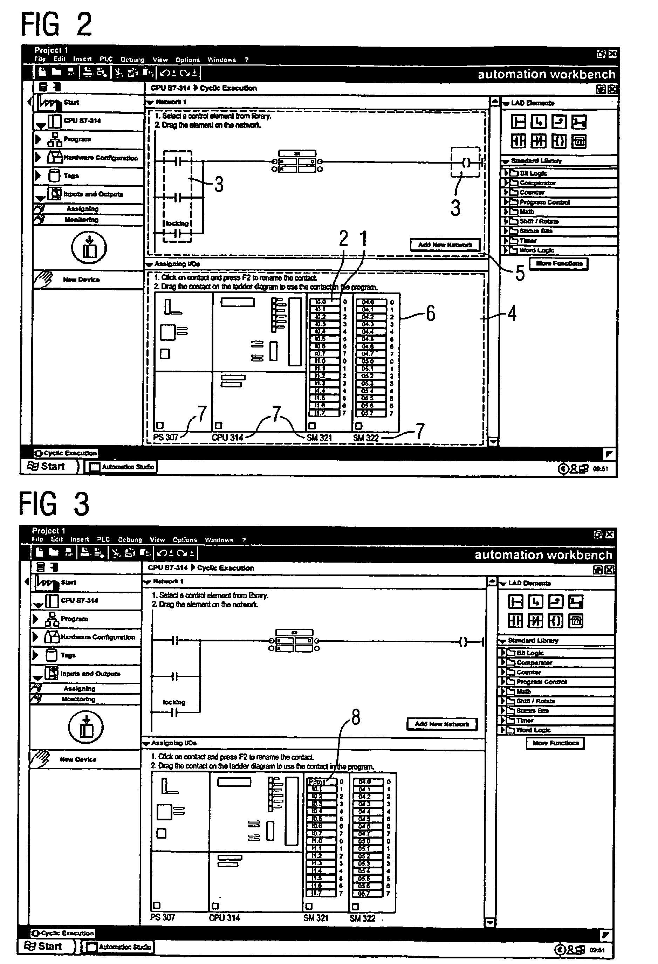

FIG 2 zeigt eine Benutzeroberfläche gemäß der Erfindung mit einem ersten Teilbereich der Benutzeroberfläche 4, in dem am Gerät vorhandene Anschlussklemmen 1 in einer zumindest schematischen Darstellung 6 visualisierbar sind, und einem zweiten Teilbereich der Benutzeroberfläche 5, in dem Programmelemente 3 einer Programmierumgebung, hier mit einem Kontaktplan, darstellbar sind. In der schematischen Darstellung 6 werden alle Baugruppen 7 und Anschlussklemmen 1 des Gerätes gezeigt, und zwar so, dass der Anwender die reale Position der Anschlussklemmen 1 wieder erkennen kann. Dieses Abbild 6 des Gerätes wird vom System erzeugt. Dazu muss der Anwender zunächst das Gerät aufbauen und an die Rechnereinheit anschließen. Über eine Plug-and-Play-Funktion liest das System alle erforderlichen Informationen zur Darstellung 6 aus dem angeschlossenen Gerät aus. In weiteren Teilbereichen der Benutzeroberfläche sind Standardfunktionen eines Engineering-Systems wie beispielsweise Menusteuerung und Auswahl von Programmelementen aufrufbar.

FIG 3 zeigt das Editieren des symbolischen Namens 8 im ersten Teilbereich der erfindungsgemäßen Benutzeroberfläche 4. Der Anwender kann mit einem Eingabehilfsmittel, insbesondere mit einer Maus, auf die Repräsentation eines Hardware-Signals, einer Anschlussklemme 1, klicken und diesem Hardware-Signal einen symbolischen Namen 8 geben. Der Name 8 wird direkt an der Anschlussklemme 1 editiert.

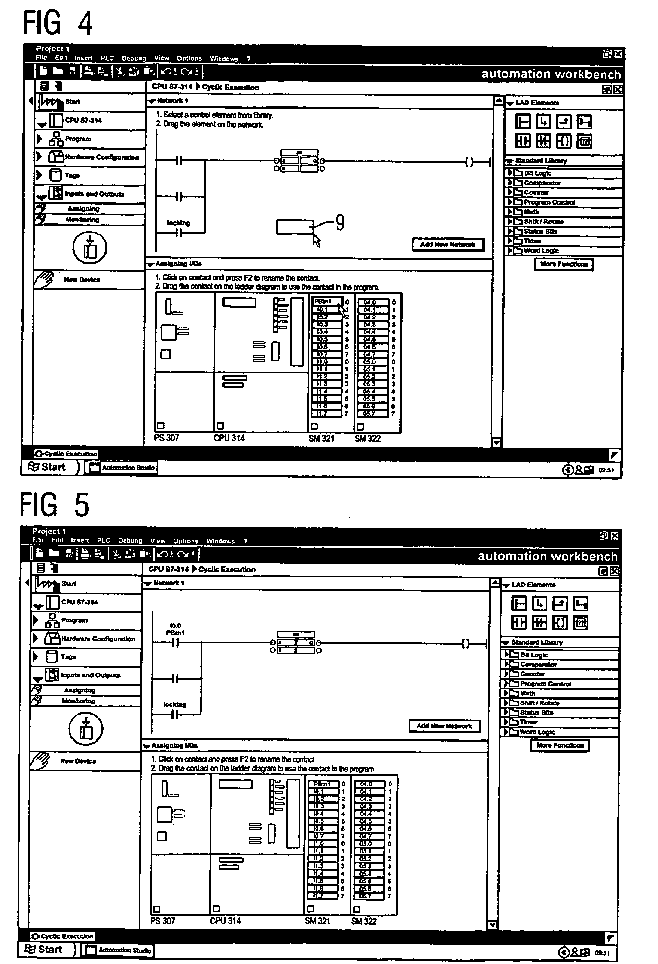

FIG 4 zeigt das Verschalten eines Hardware-Signals mit einem Programmelement 3 über Drag & Drop. Der Anwender selektiert die Anschlussklemme 1 des gewünschten Hardware-Signals im ersten Teilbereich der Benutzeroberfläche 4 und zieht sie auf das entsprechende Programmelement 3 im Kontaktplan im zweiten Teilbereich der Benutzeroberfläche 5. Während dieses Verfahrensschrittes ist die jeweilige Position der Anschlussklemme 1 durch einen Zeiger mit Rechteck 9 anzeigbar.

FIG 5 zeigt eine Ansicht des fertig verschalteten Programmelements 3 im zweiten Teilbereich der Benutzeroberfläche 5. Am Programmelement 3 wird die logische Adresse 2 und der symbolische Name 8 angezeigt, so dass der Anwender auch die im Engineering-System verwendete Adresskonvention schrittweise erlernen kann.

Zusammenfassend betrifft die Erfindung ein System und ein Verfahren zur grafischen Verschaltung von Hardware-Signalen eines Gerätes, insbesondere eines Steuerungsgerätes. Der Erfindung liegt die Aufgabe zugrunde, die grafische Verschaltung auf einfache Weise so zu gestalten, dass ein Anwender diese intuitiv und ohne Kenntnis der im Engineering-System verwendeten Adresskonvention durchführen kann. Diese Aufgabe wird durch das erfindungsgemäße System und das erfindungsgemäße Verfahren dadurch gelöst, dass die Hardware-Signale grafisch über Drag & Drop mit Programmelementen einer Programmierumgebung verschaltet werden.

## Patentansprüche

1. System zur grafischen Verschaltung von Hardware-Signalen eines Steuerungsgerätes für eine speicherprogrammierbare Steuerung, bestehend aus
- einer Rechnereinheit zum Anschluss an das Gerät mit Eingabehilfsmitteln, insbesondere Tastatur und Maus,
- einer Anzeigevorrichtung mit einer grafischen Benutzeroberfläche,
- Mitteln zur schematischen Darstellung (6) des Gerätes in einem ersten Teilbereich der Benutzeroberfläche (4), wobei die schematische Darstellung (6) des Gerätes vom System über eine Plug-and-Play-Funktion erzeugbar ist, mittels derer alle zur Darstellung (6) erforderlichen Informationen aus dem angeschlossenen Gerät auslesbar sind, und wobei am Gerät vorhandene Anschlussklemmen (1) entsprechend ihrer Lage am Gerät zumindest schematisch visualisierbar sind und mit einer der im System verwendeten Konvention entsprechenden logischen Adresse (2) versehbar sind, und
- Mitteln zur Verknüpfung der Hardware-Signale mit in einem zweiten Teilbereich der Benutzeroberfläche (5) darstellbaren Programmelementen (3) einer Programmierumgebung, wobei die im ersten Teilbereich der Benutzeroberfläche (4) visualisierten Anschlussklemmen (1) selektierbar und per Drag & Drop auf mindestens ein Programmelement (3) ziehbar sind, an dem die Adresse (2) der entsprechenden Anschlussklemme (1) anzeigbar ist.

2. System nach Anspruch 1,
wobei den Anschlussklemmen (1) in der schematischen Darstellung (6) des Gerätes jeweils ein symbolischer Name (8) zuweisbar ist, der zusammen mit der logischen Adresse (2) der jeweiligen Anschlussklemme (1) in der Programmierumgebung anzeigbar ist.

3. System nach einem der vorhergehenden Ansprüche,
wobei an den Anschlussklemmen (1) in der schematischen Darstellung (6) eine visuelle Markierung bei Verwendung der entsprechenden Anschlussklemme (1) in der Programmierumgebung anbringbar ist.

4. Verfahren zur grafischen Verschaltung von Hardware-Signalen eines Steuerungsgerätes für eine speicherprogrammierbare Steuerung, basierend auf
- einer Rechnereinheit zum Anschluss an das Gerät mit Eingabehilfsmitteln, insbesondere Tastatur und Maus,
- einer Anzeigevorrichtung mit einer grafischen Benutzeroberfläche,
- Mitteln zur schematischen Darstellung (6) des Gerätes in einem ersten Teilbereich der Benutzeroberfläche (4), wobei die schematische Darstellung (6) des Gerätes vom System über eine Plug-and-Play-Funktion erzeugt wird, mittels derer alle zur Darstellung (6) erforderlichen Informationen aus dem angeschlossenen Gerät ausgelesen werden, und wobei am Gerät vorhandene Anschlussklemmen (1) entsprechend ihrer Lage am Gerät zumindest schematisch visualisierbar sind und mit einer der im System verwendeten Konvention entsprechenden logischen Adresse (2) versehbar sind, und
- Mitteln zur Verknüpfung der Hardware-Signale mit in einem zweiten Teilbereich der Benutzeroberfläche (5) darstellbaren Programmelementen (3) einer Programmierumgebung,
wobei die im ersten Teilbereich der Benutzeroberfläche (4) visualisierten Anschlussklemmen (1) selektiert und per Drag & Drop auf jeweils ein Programmelement (3) gezogen werden, an dem die Adresse (2) der entsprechenden Anschlussklemme (1) angezeigt wird.

5. Verfahren nach Anspruch 4,
wobei den Anschlussklemmen (1) in der schematischen Darstellung (6) des Gerätes jeweils ein symbolischer Name (8) zugewiesen werden kann, der zusammen mit der logischen Adresse (2) der jeweiligen Anschlussklemme (1) in der Programmierumgebung angezeigt wird.

6. Verfahren nach einem der Ansprüche 4, 5,
wobei an den Anschlussklemmen (1) in der schematischen Darstellung (6) eine visuelle Markierung bei Verwendung der entsprechenden Anschlussklemme (1) in der Programmierumgebung angebracht wird.

7. Computerprogramm, das in einem Computer abgearbeitet wird und dabei ein Verfahren nach einem der Ansprüche 4 bis 6 ausführt.

## Claims

1. System for graphical interconnection of hardware signals of a control device for a programmable logic controller, consisting of
- A processor unit for connection to the device, with means for helping the user to make entries, especially keyboard and mouse,
- A display device with a graphical user interface,
- Means for schematic presentation (6) of the device in a first partial area of the graphical user interface (4), with the schematic presentation (6) of the device able to be generated by the system via a plug-and-play function, by means of which all information required for presentation (6) is able to be read out from the connected device, and with connection terminals (1) present on the device able to be visualized according to their location on the device at least schematically and able to be provided with a logical address (2) corresponding to the convention used in the system, and
- Means for logically linking the hardware signals with program elements (3) of a programming environment which can be presented in a second partial area of graphical user interface (5), with the terminals (1) visualized in the first partial area of the graphical user interface (4) being able to be selected and dragged using drag & drop onto at least one program element (3), at which the address (2) of the corresponding terminal (1) is able to be displayed.

2. System according to claim 1,
with a symbolic name (8) which is able to be displayed together with the logical address (2) of the terminal (1) in the programming environment being able to be allocated to each of the terminals (1) in the schematic presentation (6) of the device,

3. System according to one of the previous claims,
with a visual marking being able to be applied to the terminals (1) in the schematic presentation (6) when the corresponding terminal (1) is used in the programming environment.

4. Method for graphical interconnection of hardware signals of a control device for a programmable logic controller, consisting of
- A processor unit for connection to the device, with means for helping the user to make entries, especially a keyboard and mouse,
- A display device with a graphical user interface,
- Means for schematic presentation (6) of the device in a first partial area of the graphical user interface (4), with the schematic presentation (6) of the device able to be generated by the system via a plug-and-play function, by means of which all information required for presentation (6) is able to be read out from the connected device, and with connection terminals (1) present on the device able to be visualized according to their location on the device at least schematically and able to be provided with a logical address (2) corresponding to the convention used in the system, and
- Means for logically linking the hardware signals with program elements (3) of a programming environment which can be presented in a second partial area of graphical user interface (5), with the terminals (1) visualized in the first partial area of the graphical user interface (4) being able to be selected and dragged using drag & drop onto at least one program element (3), at which the address (2) of the corresponding terminal (1) can be displayed.

5. Method according to claim 4,
with the terminals (1) in the schematic presentation (6) of the device able to be allocated a symbolic name (8) in each case, which is displayed together with the logical address (2) of the respective terminal (1) in the programming environment.

6. Method according to one of the claims 4, 5 with a visual marking being able to be applied to the terminals (1) in the schematic presentation (6) when the corresponding terminal (1) is used in the programming environment.

7. Computer program which is processed in a computer and thereby executes a method as claimed in one of the claims 4 to 6.

## Revendications

1. Système d'interconnexion graphique de signaux matériels d'un appareil de commande pour une commande par programme enregistré, constitué de :
- une unité informatique pour le raccordement à l'appareil par des moyens auxiliaires d'entrée, notamment clavier et souris,
- un dispositif d'affichage ayant une interface graphique d'utilisateur,
- des moyens pour la représentation schématique ( 6 ) de l'appareil dans une première zone partielle de l'interface d'utilisateur ( 4 ), la représentation schématique ( 6 ) de l'appareil pouvant être produite par le système par l'intermédiaire d'une fonction dite Plug-and-Play au moyen de laquelle toutes les informations nécessaires à la représentation ( 6 ) peuvent être lues sur l'appareil raccordé et des bornes de raccordement ( 1 ) présentes sur l'appareil pouvant être visualisées au moins schématiquement en fonction de leur position sur l'appareil et être munies alors d'une adresse logique ( 2 ) correspondant à la convention utilisée dans le système, et
- des moyens pour la combinaison des signaux matériels à des éléments de programme ( 3 ) d'un environnement de programmation qui sont représentables dans une deuxième zone partielle de l'interface d'utilisateur ( 5 ), les bornes de raccordement ( 1 ) visualisées dans la première zone partielle de l'interface d'utilisateur ( 4 ) pouvant être sélectionnées et déplacées par une technique dite Drag & Drop jusque sur au moins un élément de programme ( 3 ) sur lequel l'adresse ( 2 ) de la borne de raccordement correspondante ( 1 ) peut être affichée.

2. Système selon la revendication 1, dans lequel un nom symbolique ( 8 ) peut être attribué respectivement aux bornes de raccordement ( 1 ) dans la représentation schématique ( 6 ) de l'appareil, lequel nom symbolique peut être affiché conjointement avec l'adresse logique ( 2 ) de la borne de raccordement respective ( 1 ) dans l'environnement de programmation.

3. Système selon l'une des revendications précédentes, dans lequel une marque visuelle peut être appliquée sur les bornes de raccordement ( 1 ) dans la représentation schématique ( 6 ) lors de l'utilisation de la borne de raccordement correspondante ( 1 ) dans l'environnement de programmation.

4. Procédé d'interconnexion graphique de signaux matériels d'un appareil de commande pour une commande par programme enregistré, basé sur :
- une unité informatique pour le raccordement à l'appareil par des moyens auxiliaires d'entrée, notamment clavier et souris,
- un dispositif d'affichage ayant une interface graphique d'utilisateur,
- des moyens pour la représentation schématique ( 6 ) de l'appareil dans une première zone partielle de l'interface d'utilisateur ( 4 ), la représentation schématique ( 6 ) de l'appareil étant produite par le système par l'intermédiaire d'une fonction dite Plug-and-Play au moyen de laquelle toutes les informations nécessaires à la représentation ( 6 ) sont lues sur l'appareil raccordé et des bornes de raccordement ( 1 ) présentes sur l'appareil pouvant être visualisées au moins schématiquement en fonction de leur position sur l'appareil et être munies alors d'une adresse logique ( 2 ) correspondant à la convention utilisée dans le système, et
- des moyens pour la combinaison des signaux matériels à des éléments de programme ( 3 ) d'un environnement de programmation qui sont représentables dans une deuxième zone partielle de l'interface d'utilisateur ( 5 ), les bornes de raccordement ( 1 ) visualisées dans la première zone partielle de l'interface d'utilisateur ( 4 ) étant sélectionnées et déplacées par une technique dite Drag & Drop jusque sur un élément de programme respectif ( 3 ) sur lequel l'adresse ( 2 ) de la borne de raccordement correspondante ( 1 ) peut être affichée.

5. Procédé selon la revendication 4, selon lequel un nom symbolique ( 8 ) peut être attribué respectivement aux bornes de raccordement ( 1 ) dans la représentation schématique ( 6 ) de l'appareil, lequel nom symbolique est affiché conjointement avec l'adresse logique ( 2 ) de la borne de raccordement respective ( 1 ) dans l'environnement de programmation.

6. Procédé selon l'une des revendications 4, 5, selon lequel une marque visuelle peut être appliquée sur les bornes de raccordement ( 1 ) dans la représentation schématique ( 6 ) lors de l'utilisation de la borne de raccordement correspondante ( 1 ) dans l'environnement de programmation.

7. Programme informatique qui est exécuté dans un ordinateur et qui réalise ce faisant un procédé selon l'une des revendications 4 à 6.
